# EUROPÄISCHE PATENTSCHRIFT

(11) **EP 1 201 942 B1**
(45) Veröffentlichungstag und Bekanntmachung des Hinweises auf die Patenterteilung: **28.02.2007**
(21) Anmeldenummer: 01811003.1
(22) Anmeldetag: 15.10.2001
(51) Int. Cl.: F16B 37/04

(54) **Befestigungsmittel für längliche Gegenstände**
Fastening device for elongate articles
Dispositif de fixation pour objets oblongs

(30) Priorität: 23.10.2000 DE 10052547
(43) Veröffentlichungstag der Anmeldung: 02.05.2002
(73) Patentinhaber: HILTI Aktiengesellschaft, 9494 Schaan (LI)
(72) Erfinder: Herb, Armin, 86974 Apfeldorf (DE)
(74) Vertreter: Wildi, Roland

(56) Entgegenhaltungen:
- EP-A- 0 671 581
- US-A- 4 146 074
- US-A- 4 285 379
- US-A- 5 051 047

## Beschreibung

Die Erfindung betrifft eine Befestigungsvorrichtung mit einer zumindest zwei zueinander bewegbare, gegeneinander vorgespannte Greifelemente aufweisenden Verankerungseinheit und einer Montageschiene mit einer Montageöffnung, welche beidseits von Längswänden begrenzt ist, die an ihrer einander zugewandten Innenseite Haltevorsprünge aufweisen, die in einer Einraststellung zumindest teilweise von den entsprechenden Greifelementen der Verankerungseinheit quer zur Längsrichtung der Montageschiene hintergriffen werden, wobei die Verankerungseinheit mittels einem Bolzen verbunden ist.

Befestigungsvorrichtungen der oben genannten Art dienen dem Befestigen von Gegenständen beispielsweise an einem Untergrund, mittels einer Montageschiene. Beispielsweise dient die Befestigungsvorrichtung dem Abhängen von Gegenständen wie Rohrleitungen oder dergleichen.

Aus der EP-B1-671581 ist beispielsweise eine Befestigungsvorrichtung der genannten Art bekannt, die ein die Haltevorsprünge hintergreifendes Greifelement aufweist. Das Greifelement weist zwei gegeneinander elastisch federende Stützteile auf, die die jeweils korrespondierenden Haltevorsprünge hintergreifen. Das Greifelement ist mittels eines Bolzens mit einem die freien Längsränder der Montageschiene beaufschlagenden Anschlag verbunden. Durch Verspannen des Greifelementes mit dem Anschlag sind die Haltevorsprünge am Bolzen festklemmbar.

Der Vorteil der bekannten Lösung liegt darin, dass das Stützteil in einer Vormontagestellung in die Montageschiene einrastet und somit ein Herausfallen der Verankerungseinheit verhindert. Insbesondere bei einer Über-Kopf-Montage erweist sich dieses Merkmal als äusserst vorteilhaft.

Nachteilig an der bekannten Lösung ist, dass das Greifelement unstabil ist. Einerseits führt dieser Umstand zu einer unzureichenden Führung des Verankerungsteils beim Einführen in die Montageschiene und andererseits resultieren daraus niedrige Lastwerte für die Befestigungsvorrichtung insgesamt.

Der vorliegenden Erfindung liegt die Aufgabe zugrunde, eine Befestigungsvorrichtung mit hintergreifenden Greifelementen zu schaffen, die hohe Lastwerte aufweist und eine einfache Handhabung erlaubt. Ausserdem soll die Herstellung der Befestigungsvorrichtung wirtschaftlich sein.

Die erfindungsgemässe Lösung geht davon aus, dass die Verankerungseinheit ein Aufnahmeteil mit Öffnungen zur Führung der Greifelemente aufweist.

Dadurch, dass das Aufnahmeteil mit Öffnungen versehen ist, werden die Greifelemente, welche die Haltevorsprünge hintergreifen, optimal geführt. Die Verankerungseinheit gewährleistet damit wesentlich höhere Haltewerte, selbst bei dynamischer Belastung der Befestigungsvorrichtung.

Vorteilhafterweise weist das Aufnahmeteil zumindest zwei, in Längsrichtung verlaufende, Verankerungswände auf, die in der Einraststellung jeweils zumindest zwei Auflagepunkte mit dem korrespondierenden Haltevorsprung aufweisen, um ein Verdrehen des Aufnahmeteils, insbesondere der Verankerungseinheit gegenüber der Montageschiene, zu verhindern. Die insgesamt zumindest vier Auflagepunkte stehen im wesentlichen mit den Haltevorsprüngen in Kontakt. Ferner stellen die Auflagepunkte ein Einführen der Verankerungseinheit in die Montageöffnung in einer vorbestimmten Position gegenüber den Haltevorsprüngen sicher.

Die Verankerungswände verlaufen vorzugsweise parallel zu den Haltevorsprüngen und in der Einraststellung liegen sie an diesen im wesentlichen an. Damit ist einerseits die zur Führung der Verankerungseinheit vorliegende Fläche maximiert und andererseits eine Kraftverteilung bei schräg angreifenden Kräften optimal auf die Verankerungseinheit verteilt.

In einer bevorzugten Ausführungsform ist das Aufnahmeteil U-förmig ausgebildet und die Verankerungswände bilden die freien Schenkel des Aufnahmeteils, um die auf die Befestigungsvorrichtung durch eine Last wirkende Kraft gleichmässig mittels der Greifelemente an die Montageschienen weiterzuleiten. Ausserdem fördert diese Ausbildung des Aufnahmeteils eine wirtschaftliche Herstellung und eine einfache Montage der Befestigungsvorrichtung.

Um eine gelenkige Lagerung der Greifelemente sicherzustellen, sind die Greifelemente vorteilhafterweise L-förmig ausgebildet und weisen an dem die Haltevorsprünge hintergreifenden gegenüberliegenden Ende einen Steg auf, der in eine komplementär ausgebildete Ausnehmung am Aufnahmeteil bringbar ist. Diese einfache Konstruktion wirkt sich positiv auf die Wirtschaftlichkeit der Befestigungsvorrichtung aus. Selbstverständlich können auch andere Lösungswege zur Lagerung der Greifelemente Anwendung finden. Beispielweise können die Greifelemente einteilig aus Federstahl gebildet sein. Vorteilhafterweise weist ein Greifelement 2 bis 3 einzelne Greiffinger auf, welche die Haltevorsprünge hintergreifen.

Bei einer anderen bevorzugten Ausführungsform kreuzen sich zwei Greifelemente in einer Drehachse, wobei die Greifelemente in der Drehachse drehbar miteinander verbunden sind und in der Einraststellung durch eine an der Drehachse gelagerte Torsionsfeder in Richtung Haltevorsprünge gegeneinander vorgespannt werden. Besonders vorteilhaft bei dieser Ausführungsform wirkt sich beispielsweise die Anordnung der Greifelemente aus. Diese bewirkt eine besonders hohe Stabilität.

Vorzugsweise weisen die Greifelemente, zumindest an dem die Haltevorsprünge hintergreifenden Endbereich, einen V-förmigen Querschnitt auf, um mit wenig Materialeinsatz und hohen Gewichtseinsparungen eine optimale Stabilität der Greifelemente zu erreichen. Ausserdem weisen die Greifelemente an dem die Haltevorsprünge hintergreifenden Endbereich eine Einführrampe auf, um beim Einführen der Verankerungseinheit ein leichtes Einschnappen der Greifelemente sicherzustellen. Die Greifelemente gleiten beim Einführen entlang der Rampen gegeneinander und erst in einer die Haltevorsprünge hintergreifenden Position schnappen sie ein.

Vorteilhafterweise weist die Verankerungseinheit einen die freien Längsränder der Montageschiene beaufschlagenden Anschlag auf. Insbesondere falls ein zu befestigender Gegenstand diese Funktion nicht übernehmen kann, beispielweise weil er die dazu notwendigen geometrischen Abmessungen nicht aufweist, ist ein Anschlag notwendig. Der Anschlag kann beispielsweise plattenförmig ausgebildet sein und die Montageöffnung teilweise überragen.

Der Bolzen weist vorzugsweise zumindest teilweise über seine Längserstreckung ein Aussengewinde und an dem der Verankerungseinheit abgewandten Ende eine Drehmomentübertragungsvorrichtung auf, die den Bolzen zumindest teilweise radial überragt. Dadurch lässt sich ein Gegenstand leicht mittels der Befestigungsvorrichtung an der Montageschiene befestigen. Als Drehmomentübertragungsvorrichtung kann beispielsweise ein Mehrkant-Schraubenkopf Anwendung finden. Der zu befestigende Gegenstand kann beispielsweise eine Durchgangsbohrung aufweisen, die etwa dem Aussendurchmesser des Bolzens entspricht. Die zumindest teilweise radial den Bolzen überragende Drehmomentübertragungsvorrichtung stellt ein Anpressen des Gegenstandes gegen die Montageschiene sicher.

Das Aufnahmeteil weist vorteilhafterweise ein Innengewinde zur Verbindung der Verankerungseinheit mit dem Bolzen auf, um eine wirtschaftliche und handliche Befestigung zu gewährleisten.

Die Erfindung wird nachstehend anhand eines Ausführungsbeispieles näher erläutert. Es zeigen:
- Fig. 1: Eine erste Ausführungsform einer erfindungsgemässen Befestigungsvorrichtung im Querschnitt in einer nicht eingeführten Position;
- Fig. 2: die in Fig. 1 dargestellte Befestigungsvorrichtung in der eingeführten Position;
- Fig. 3: eine Längsansicht der in Fig.1 und 2 dargestellten Befestigungsvorrichtung;
- Fig. 4: eine weitere Ausführungsform der erfindungsgemässen Befestigungsvorrichtung als Winkelverbinder für zwei Montageschienen;
- Fig. 5: die in Fig. 4 dargestellte Ausführungsform um 90° gedreht;
- Fig. 6: eine weitere Ausführungsform mit gekreuzten Greifelementen in einer nicht eingeführten Position;
- Fig. 7: die in Fig. 6 dargestellte Ausführungsform in der eingeführten Position;
- Fig. 8: ein Greifelement der n Fig. 6 und 7 dargestellten Ausführungsform.

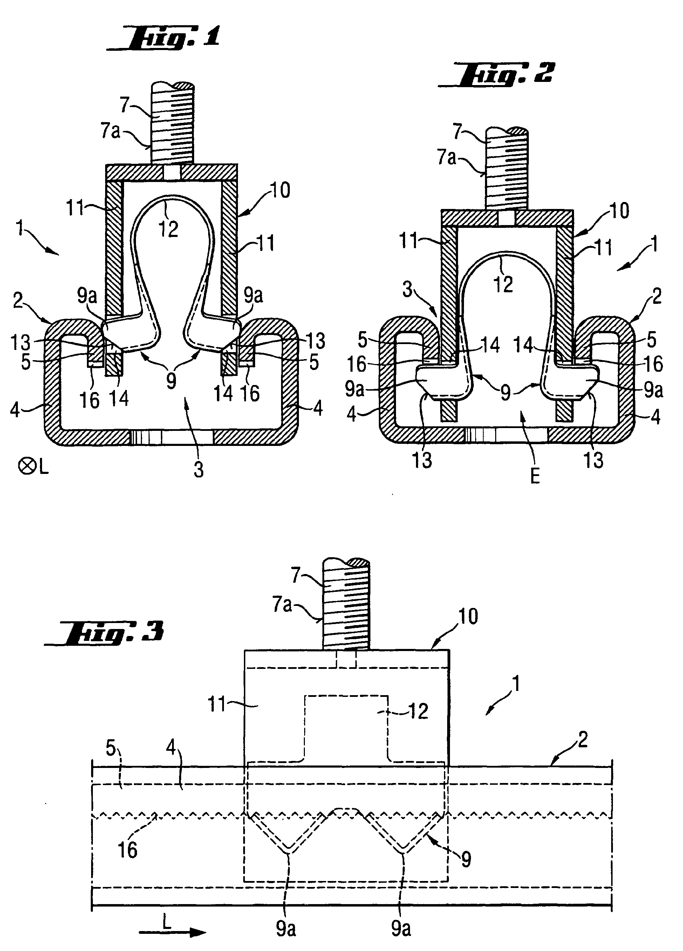

In den Fig.1 und 2 ist eine erfindungsgemässe Befestigungsvorrichtung in einer nicht eingeführten Position mit einer, zumindest zwei zueinander bewegbare, gegeneinander vorgespannte Greifelemente 9 aufweisenden, Verankerungseinheit 1 und einer Montageschiene 2 dargestellt. Die Montageschiene 2 weist eine Montageöffnung 3 auf, welche beidseits von Längswänden 4 begrenzt ist. Die Längswände 4 weisen an ihren einander zugewandten Innenseiten Haltevorsprünge 5 auf, die in einer Einraststellung E, wie sie insbesondere in Fig. 2 dargestellt ist, zumindest teilweise von den entsprechenden Greifelementen 9 der Verankerungseinheit 1 quer zur Längsrichtung L der Montageschiene 2 hintergriffen werden.

Die Verankerungseinheit 1 weist zum Befestigen eines nicht dargestellten Gegenstandes einen Bolzen 7 mit einem Aussengewinde 7a auf, der mit einem Aufnahmeteil 10, das mehrere Öffnungen 14 zur Führung der Greifelemente 9 aufweist, verbunden ist. Das Aufnahmeteil 10 weist einen U-förmige Querschnitt auf, wobei die freien Schenkel durch zwei Verankerungswände 11 gebildet werden, die parallel zu den Haltevorsprüngen 5 verlaufen und in der Einraststellung E an diesen im wesentlichen anliegen.

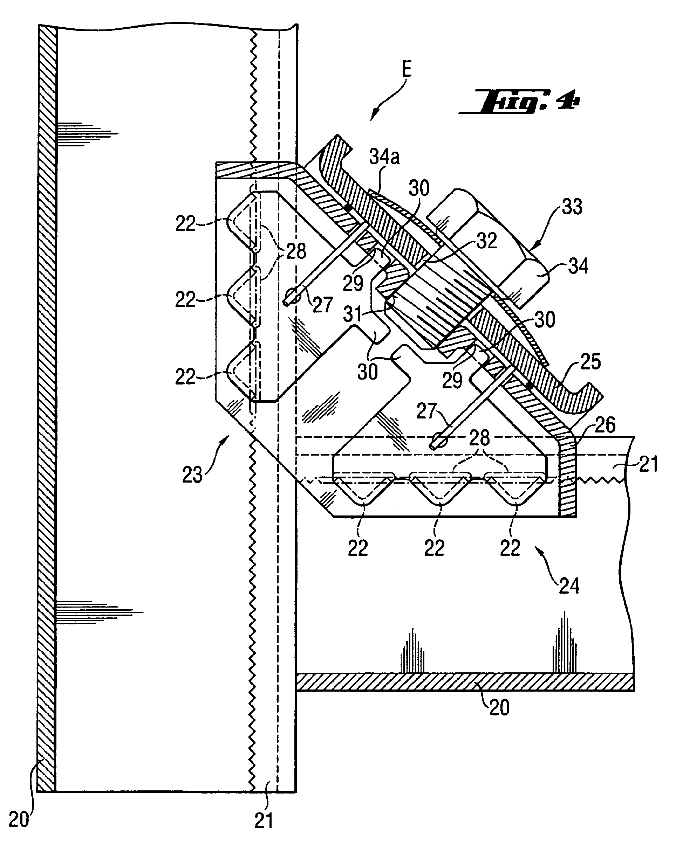

Die Greifelemente 9 sind L-förmig, vorzugsweise mit 2 bis 3 Greiffingern 9a ausgebildet und durch einen U-förmigen Federbügel 12 miteinander verbunden, wie dies insbesondere aus Fig. 1 und 2 hervorgeht. Um ein leichtes Einführen des Aufnahmeteils in die Montageöffnung sicherzustellen, weisen die Greifelemente 9 jeweils eine Einführrampe 13 auf. Ferner ist der Querschnitt der Greifelemente 9 im Bereich der Greiffinger 9a V-förmig ausgebildet, wie dies insbesondere aus Fig. 3 hervorgeht. Die V-förmige Ausbildung bewirkt einerseits eine Versteifung der Greifelemente 9, insbesondere der Greiffinger 9a und andererseits stehen Kannten, welche mit einer, an den Haltevorsprüngen 5 angeordneten, Gegenverzahnung 16 zusammenwirken

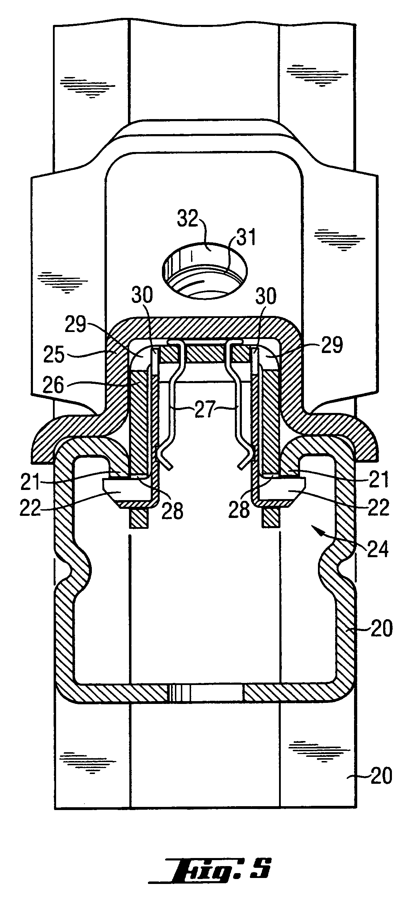

Fig. 4 und 5 zeigen ein weiteres Ausführungsbeispiel einer erfindungsgemässen Befestigungsvorrichtung mit einer Montageschiene 20, die an ihren Haltevorsprüngen 21 von Greifelementen 22 in einer Einraststellung E hintergriffen werden. Insbesondere die Fig. 4 zeigt die Anwendung der erfindungsgemässen Befestigungsvorrichtung als Schienenwinkel. Hierfür sind zwei Verankerungseinheiten 23 und 24 durch ein Winkelelement 25 miteinander verbunden. Ein Aufnahmeteil 26 führt die L-förmigen Greifelemente 22, die durch ein Federelement 27 gegeneinander vorgespannt sind, wie dies insbesondere aus Fig. 5 hervorgeht. Die Greifelemente 22 durchgreifen das Aufnahmeteil 26 in Öffnungen 28 und mittels Stege 30 in Ausnehmungen 29. Dadurch sind die Greifelemente 22 gelenkig mit dem Aufnahmeteil 26 verbunden. Dasselbe weist ferner auf der dem Winkelelement 25 zugewandten Seite ein Innengewinde 31 auf.

Das Winkelelement 25 weist eine Durchgangsbohrung 32 zur Aufnahme eines Bolzens 33 mit einem Schraubenkopf 34 und einem Aussengewinde auf. Der Schraubenkopf 34 überragt den Bolzen 33 radial und dient als Drehmomentübertragungsvorrichtung zum endgültigen Befestigen der erfindungsgemässen Befestigungsvorrichtung. Zur Vorfixierung ist zwischen dem Schraubenkopf 34 und dem Winkelelement 25 eine Federelement 34a angeordnet

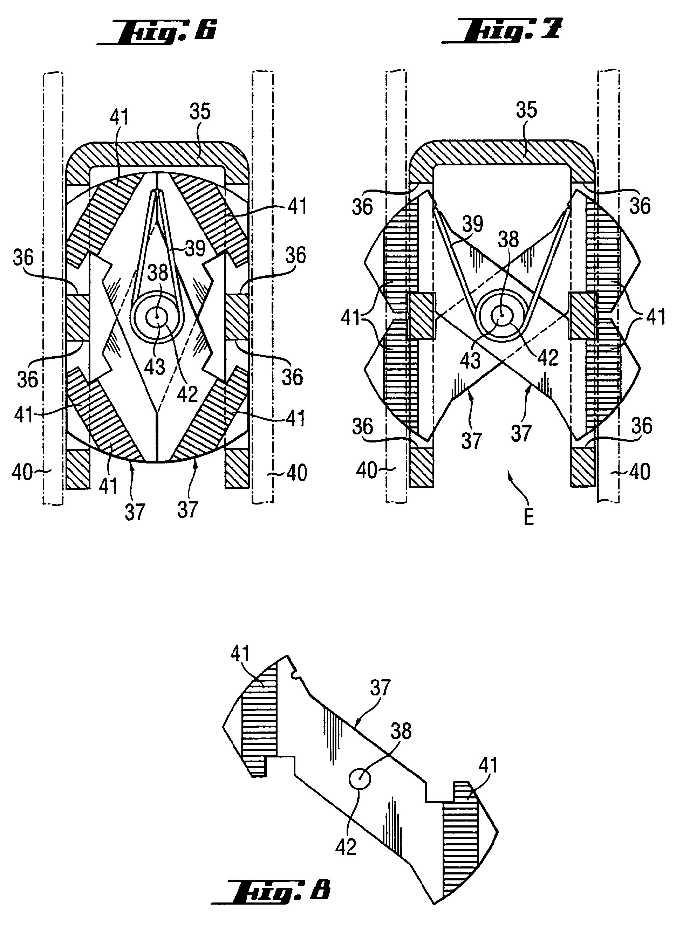

Die Fig. 6 bis 8 zeigen eine weitere Ausführungsform der erfindungsgemässen Befestigungsvorrichtung mit einem Aufnahmeteil 35 und zwei durch die am Aufnahmeteil 35 angeordneten Öffnungen 36 geführten Greifelemente 37. Die beiden Greifelemente 37 kreuzen sich in einer Drehachse 38, wobei die Greifelemente 37 in der Drehachse 38 drehbar miteinander verbunden sind und durch eine an der Drehachse 38 gelagerte Torsionsfeder 39 in Richtung Haltevorsprünge 40 gegeneinander vorgespannt sind, wie dies insbesondere in Fig. 7 dargestellt ist.

Fig. 8 zeigt ein Greifelement 37 mit einer an den hintergreifenden Endbereichen angeordneten Verzahnung 41. Die Verzahnung 41 kommt in der Einraststellung E mit dem hintergriffenen Haltevorsprung 40 in Kontakt und erhöht damit den Lastwert der Befestigungsvorrichtung, da sich die Reibung zwischen dem Haltevorsprung 40 und dem Greifelement 37 erhöht, insbesondere falls die Haltevorsprünge 40 eine Gegenverzahnung aufweisen. Mittig weisen die Greifelemente 37 eine Durchgangsbohrung 42 auf, die von einem am Aufnahmeteil 35 befestigten Bolzen 43 zur Führung der Greifelemente 37 durchgriffen wird.

## Patentansprüche

1. Befestigungsvorrichtung mit einer, zumindest zwei zueinander bewegbare, gegeneinander vorgespannte Greifelemente (9, 22, 37) aufweisenden, Verankerungseinheit (1) und einer Montageschiene (2, 20) mit einer Montageöffnung (3), welche beidseits von Längswänden (4) begrenzt ist, die an ihrer einander zugewandten Innenseite Haltevorsprünge (5, 21, 40) aufweisen, die in einer Einraststellung (E) zumindest teilweise von den entsprechenden Greifelementen (9, 22, 37) der Verankerungseinheit (1) quer zur Längsrichtung (L) der Montageschiene hintergriffen werden, wobei die Verankerungseinheit (1) mittels einem Bolzen (7, 33) verbunden ist, **dadurch gekennzeichnet, dass** die Verankerungseinheit (1) ein Aufnahmeteil (10, 26, 35) mit Öffnungen (14, 28, 36) zur Führung der Greifelemente (9, 22, 37) aufweist.

2. Befestigungsvorrichtung nach Anspruch 1, **dadurch gekennzeichnet, dass** das Aufnahmeteil (10, 26, 35) zumindest zwei, in Längsrichtung (L) verlaufende, Verankerungswände (11) aufweist, die in der Einraststellung (E) jeweils zumindest zwei Auflagepunkte mit dem korrespondierenden Haltevorsprung (5, 21, 40) aufweisen.

3. Befestigungsvorrichtung nach Anspruch 2, **dadurch gekennzeichnet, dass** die Verankerungswände (11) parallel zu den Haltevorsprüngen (5, 21, 40) verlaufen und in der Einraststellung (E) an diesen im wesentlichen anliegen.

4. Befestigungselement nach einem der Ansprüche 1 bis 3, **dadurch gekennzeichnet, dass** das Aufnahmeteil (10, 26, 35) U-förmig ausgebildet ist und die Verankerungswände (11) die freien Schenkel des Aufnahmeteils (10, 26, 35) bilden.

5. Befestigungselement nach einem der Ansprüche 1 bis 4, **dadurch gekennzeichnet, dass** die Greifelemente (22) L-förmig ausgebildet sind und an dem die Haltevorsprünge (21) hintergreifenden gegenüberliegenden Ende einen Steg (30) aufweisen, der in eine komplementär ausgebildete Ausnehmung (29) am Aufnahmeteil (26) bringbar ist.

6. Befestigungselement nach einem der Ansprüche 1 bis 5, **dadurch gekennzeichnet, dass** zwei Greifelemente (37) sich in einer Drehachse (43) kreuzen, wobei die Greifelemente (37) in der Drehachse (43) drehbar miteinander verbunden sind und in der Einraststellung (E) durch eine an der Drehachse (43) gelagerte Torsionsfeder (39) in Richtung Haltevorsprünge (40) gegeneinander vorgespannt werden.

7. Befestigungsvorrichtung nach einem der Ansprüche 1 bis 6, **dadurch gekennzeichnet, dass** die Greifelemente (9, 37) zumindest an dem die Haltevorsprünge (5, 40) hintergreifenden Endbereich einen V-förmigen Querschnitt aufweisen.

8. Befestigungsvorrichtung nach einem der Ansprüche 1 bis 7, **dadurch gekennzeichnet, dass** die Verankerungseinheit (1) einen die freien Längsränder der Montageschiene (2) beaufschlagenden Anschlag aufweist.

9. Befestigungsvorrichtung nach einem der Ansprüche 1 bis 8, **dadurch gekennzeichnet, dass** der Bolzen (7) zumindest teilweise über seine Längserstreckung ein Aussengewinde (7a) und an dem der Verankerungseinheit (1) abgewandten Ende eine Drehübertragungsvorrichtung (34) aufweist, die den Bolzen (7) zumindest teilweise radial überragt.

10. Befestigungsvorrichtung nach Anspruch 9, **dadurch gekennzeichnet, dass** das Aufnahmeteil (10) ein Innengewinde (18) zur Verbindung der Verankerungseinheit (1) mit dem Bolzen (7, 33) aufweist.

## Claims

1. Fastening device with an anchoring unit (1) having at least two gripping elements (9, 22, 37) which are moveable towards each other but biased against each other, and with an installation rail (2, 20) with an installation opening (3) which is bounded on either side by longitudinal walls (4) behind which, in the latched position (E), the corresponding gripping elements (9, 22, 37) of the anchoring unit (1) at least partly reach at right angles to the longitudinal direction (L) of the installation rail, **characterized in that** the anchoring unit (1) has a holder (10, 26, 35) with openings (14, 28, 36) to guide the gripping elements (9, 22, 37).

2. Fastening device according to Claim 1, **characterized in that** the holder (10, 26, 35) has at least two anchoring walls (11) running in the longitudinal direction (L) which, in the latched position (E), each have at least two points of contact with the corresponding retaining lip (5, 21, 40).

3. Fastening device according to Claim 2, **characterized in that** the anchoring walls (11) run parallel with the retaining lips (5, 21, 40) and are substantially in contact with them in the latched position (E).

4. Fastening element [sic] according to any one of Claims 1 to 3, **characterized in that** the holder (10, 26, 35) is U-shaped and the anchoring walls (11) form the free arms of the holder (10, 26, 35).

5. Fastening element [sic] according to any one of Claims 1 to 4, **characterized in that** the gripping elements (22) are L-shaped, and, at the end opposite [the end region] reaching behind the retaining lips (21), have a tooth (30) that can be inserted in a mating recess (29) on the holder (26).

6. Fastening element [sic] according to any one of Claims 1 to 5, **characterized in that** two gripping elements (37) cross at a pivot (43), the gripping elements (37) being pivotably connected to each other at the pivot (43) and, in the latched position (E), being biased against each other and towards the retaining lips (40) by a torsion spring (39) mounted on the pivot (43).

7. Fastening device according to any one of Claims 1 to 6, **characterized in that** the gripping elements (9, 37) have a V-shaped cross-section at least at the end region reaching behind the retaining lips (5, 40).

8. Fastening device according to any one of Claims 1 to 7, **characterized in that** the anchoring unit (1) has a stop abutting the free longitudinal edges of the installation rail (2).

9. Fastening device according to any one of Claims 1 to 8, **characterized in that** the bolt (7) has a male thread (7a) over at least part of its longitudinal extent, and has a torque-transmitting device (34) which at least partly projects radially from the bolt (7) at the end remote from the anchoring unit (1).

10. Fastening device according to Claim 9, **characterized in that** the holder (10) has a female thread (18) for attaching the anchoring unit (1) to the bolt (7, 33).

## Revendications

1. Dispositif de fixation comprenant une unité d'ancrage (1), munie de crochets (9, 22, 37) déplaçables l'un par rapport à l'autre et précontraints l'un vers l'autre, et un rail de montage (2, 20) pourvu d'une ouverture de montage (3), laquelle est délimitée de part et d'autre par des parois longitudinales (4) comportant, sur leurs côtés intérieurs en vis-à-vis, des saillies de retenue (5, 21, 40) derrière lesquelles, dans leur position encliquetée (E), les crochets correspondants (9, 22, 37) de l'unité d'ancrage (1) s'engagent transversalement à la direction longitudinale (L) du rail de montage, l'unité d'ancrage (1) étant reliée au moyen d'un goujon (7, 33), **caractérisé en ce que** l'unité d'ancrage (1) comporte une partie réceptrice (10, 26, 35) pourvue d'ouvertures (14, 28, 36) pour guider les crochets (9, 22, 37).

2. Dispositif de fixation selon la revendication 1, **caractérisé en ce que** la partie réceptrice (10, 26, 35) comporte au moins deux parois d'ancrage (11) qui s'étendent dans la direction longitudinale (L) et qui, dans la position encliquetée (E), possèdent chacune au moins deux points de contact avec la saillie de retenue correspondante (5, 21, 40).

3. Dispositif de fixation selon la revendication 2, **caractérisé en ce que** les parois d'ancrage (11) s'étendent parallèlement aux saillies de retenue (5, 21, 40) et, dans la position encliquetée (E), sont sensiblement appliquées contre celles-ci.

4. Élément de fixation selon une des revendications 1 à 3, **caractérisé en ce que** la partie réceptrice (10, 26, 35) est conformée en U et les parois d'ancrage (11) forment les branches libres de la partie réceptrice (10, 26, 35).

5. Élément de fixation selon une des revendications 1 à 4, **caractérisé en ce que** les crochets (22) sont conformés en L et comportent, à leur extrémité opposée qui s'engage derrière les saillies de retenue (21), un talon (30) qui peut être inséré dans un évidement de conformation complémentaire (29) ménagé dans la partie réceptrice (26).

6. Élément de fixation selon une des revendications 1 à 5, **caractérisé en ce que** deux crochets (37) se croisent sur un axe de rotation (43), les crochets (37) étant reliés entre eux à rotation sur l'axe de rotation (43) et, dans la position encliquetée (E), étant précontraints l'un vers l'autre en direction de saillies de retenue (40) par un ressort de torsion (39) monté sur l'axe de rotation (43).

7. Dispositif de fixation selon une des revendications 1 à 6, **caractérisé en ce que** les crochets (9, 37) présentent, au moins dans leur zone d'extrémité s'engageant derrière les saillies de retenue (5, 40), une section transversale en forme de V.

8. Dispositif de fixation selon une des revendications 1 à 7, **caractérisé en ce que** l'unité d'ancrage (1) comporte une butée qui sert d'appui aux bords longitudinaux libres du rail de montage (2).

9. Dispositif de fixation selon une des revendications 1 à 8, **caractérisé en ce que** le goujon (7) comporte, au moins sur une partie de son extension axiale, un filetage extérieur (7a) et, à l'extrémité orientée à l'opposé de l'unité d'ancrage (1), un dispositif de transmission de rotation (34) qui, au moins en partie, dépasse radialement du goujon (7).

10. Dispositif de fixation selon la revendication 9, **caractérisé en ce que** la partie réceptrice (10) comporte un taraudage (18) pour relier l'unité d'ancrage (1) au goujon (7, 33).
